# EUROPÄISCHE PATENTSCHRIFT

(11) **EP 1 994 372 B1**
(45) Veröffentlichungstag und Bekanntmachung des Hinweises auf die Patenterteilung: **23.06.2010**
(21) Anmeldenummer: 07712155.6
(22) Anmeldetag: 06.02.2007
(51) Int. Cl.: G01F 1/688, G01P 5/10, G01K 11/32

(54) **STRÖMUNGSMESSVORRICHTUNG ZUR BESTIMMUNG EINER STRÖMUNGSRICHTUNG**
FLOWMETER FOR DETERMINING A FLOW DIRECTION
DISPOSITIF DE MESURE D'ÉCOULEMENT POUR DÉTERMINER UN SENS D'ÉCOULEMENT

(30) Priorität: 16.03.2006 DE 102006012230
(43) Veröffentlichungstag der Anmeldung: 26.11.2008
(73) Patentinhaber: SIEMENS AKTIENGESELLSCHAFT, 80333 München (DE)
(72) Erfinder: BOSSELMANN, Thomas, 91080 Marloffstein (DE); WILLSCH, Michael, 07745 Jena (DE)
(86) Internationale Anmeldenummer: PCT/EP2007/051124
(87) Internationale Veröffentlichungsnummer: WO 2007/104614

(56) Entgegenhaltungen:
- WO-A-2004/042326
- JP-A- 2005 172 713

## Beschreibung

Die vorliegende Erfindung betrifft ein Strömungsmessvorrichtung zur Bestimmung einer Strömungsrichtung eines Fluids. Die Strömungsmessvorrichtung weist dabei ein Messelement mit mindestens einem Lichtwellenleiter und wenigstens zwei zum mindestens einen Lichtwellenleiter benachbart angeordneten elektrischen Heizelementen, eine Steuerungseinheit und eine Auswerteeinheit auf. Ferner betrifft die Erfindung ein Verfahren zum Bestimmen einer Strömungsrichtung eines Fluids sowie eine elektrische Maschine mit der Strömungsmessvorrichtung.

In elektrischen Maschinen aller Leistungsklassen, insbesondere aber mit höherer Leistung, wird eine erhebliche Wärme entwickelt, die im Hinblick auf eine verbesserte Maschineneffizienz und/oder höherer Lebensdauer mittels kühltechnischer Maßnahmen abzuführen ist. So sind beispielsweise luftgekühlte Maschinen wie Generatoren oder Motoren, insbesondere mit Leistungen unter 300 MVA, bekannt, bei denen eine Kühlung durch einen vergleichsweise großen Luftstrom erfolgt. Dieser Luftstrom kann insbesondere durch ein zahlreiche Strömungskanäle umfassendes Leitungssystem geleitet werden (vgl. z. B. die DE 42 42 132 A1 oder die EP 0 853 370 A1). Es kann beispielsweise durch die Strömungskanäle des Leitungssystems Luft von außen nach innen durch den Stator der Maschine gepresst werden. Gleichzeitig wird jedoch vom Rotor der Maschine Luft angesaugt und von innen nach außen in umgekehrte Richtung durch den Stator gepresst. Wenn sich beide Luftströme ungünstig überlagern, kommt es innerhalb des Leitungssystems zum Strömungsstillstand und somit gegebenenfalls zu einer örtlichen Überhitzung und Beschädigung der Maschine.

In der WO 2004/042326 A2 ist eine Strömungsmessvorrichtung zur Bestimmung einer Strömungsgeschwindigkeit eines ein Messelement der Strömungsmessvorrichtung umströmenden Fluids, wie beispielsweise eines Gasstroms, mit einem mehrere Faser-Bragg-Gitter aufweisenden Lichtwellenleiter und wenigstens einem zum Leiter benachbart angeordneten, elektrischen Heizelement angegeben. Hiermit kann aus einer Beeinflussung einer in den Lichtwellenleiter eingespeisten elektromagnetischen Welle durch die Temperatur des Leiters die Strömungsgeschwindigkeit entlang der Längserstreckung des Messelements ermittelt werden. Der Lichtwellenleiter ist über das elektrische Heizelement mit konstanter Wärmebeaufschlagung beheizbar, wobei sich am Messelement eine Temperaturverteilung in Längserstreckung entsprechend der lokalen Strömungsgeschwindigkeit ergibt. Diese Strömungsmessvorrichtung ist somit geeignet, mit nur einem einzigen Messelement eine Vielzahl von lokalen Strömungsgeschwindigkeiten zu ermitteln. Die Ermittlung der Richtung, in welche das Fluid relativ zum Messelement fließt, ist jedoch nicht möglich.

Aus der JP 2005 172713 ist eine Vorrichtung zur Strömungsmessung, speziell zur Bestimmung einer Strömungsrichtung bekannt, die einen mehrere Faser-Bragg-Gitter aufweisenden Lichtwellenleiter und ein Heizelement umfasst. Die Strömungsrichtung wird hierbei anhand der Temperaturen auf zwei Oberflächen des Heizelements ermittelt.

Der vorliegenden Erfindung liegt daher die Aufgabe zugrunde, eine Strömungsmessvorrichtung sowie ein Verfahren bereitzustellen, mit welchen die Strömungsrichtung eines Fluids ermittelbar ist, als auch eine elektrische Maschine anzugeben, bei welcher die Strömungsrichtung eines Kühlfluids überwacht werden kann.

Zur Lösung der Aufgabe wird eine Strömungsmessvorrichtung entsprechend den Merkmalen des unabhängigen Patentanspruchs 1 angegeben.

Bei der erfindungsgemäßen Strömungsmessvorrichtung handelt es sich um eine Strömungsmessvorrichtung zur Bestimmung einer Strömungsrichtung eines Fluids, aufweisend
- ein von dem Fluid umströmbares Messelement mit mindestens einem Lichtwellenleiter und wenigstens zwei zum mindestens einen Lichtwellenleiter benachbart angeordneten elektrischen Heizelementen, wobei
   - der mindestens eine Lichtwellenleiter über jeweils einen, von dem jeweiligen Heizelement zum mindestens einen Lichtwellenleiter gerichteten Wärmestrom mit Wärme beaufschlagbar ist,
   - die Richtungen der Wärmeströme zumindest anteilig entgegengesetzt sind,
   - die einzelnen Wärmeströme unterschiedlich stark mit der Strömungsrichtung des Fluids korreliert sind,
      und
   - mindestens eine in den mindestens einen Lichtwellenleiter einkoppelbare elektromagnetische Welle entsprechend der Temperatur des mindestens einen Lichtwellenleiters beeinflussbar ist,
- eine Steuerungseinheit, mit welcher den zumindest beiden Heizelementen zeitlich nacheinander elektrischen Leistung zuführbar ist,
   und
- eine Auswerteeinheit, mit welcher die von den einzelnen Wärmeströmen ausgehende Temperaturbeeinflussung der elektromagnetischen Welle auswertbar und die Strömungsrichtung des Fluids bestimmbar ist.

Das Messelement, das in seine Längserstreckung vorzugsweise senkrecht zur Strömungsrichtung des Fluids in diesem angeordnet ist, weist über den Umfang seines Querschnittes, welcher insbesondere kreisförmig ist, unterschiedliche örtliche Strömungsverhältnisse auf. So erfolgt der Wärmetransport über die Oberfläche des Messelements aufgrund der örtlich unterschiedlichen Strömungsgeschwindigkeiten des Fluids nicht gleichmäßig über den Umfang des Querschnitts. Im Messelement stellt sich aus diesem Grunde bei gleicher Leistungsbeaufschlagung der Heizelemente abhängig von deren Position betragsmäßig ein unterschiedlicher Wärmestrom in Richtung des mindestens einen Lichtwellenleiters ein. Durch zeitlich sequenzielle Leistungsbeaufschlagung der einzelnen Heizdrähte oder auch einzelner Heizdrahtkonfigurationen ist es somit möglich, den oder auch die Temperaturunterschiede der einzelnen Sequenzen am Ort des mindestens einen Lichtwellenleiters zu bestimmen und somit auf die Strömungsrichtung des das Messelement umströmenden Fluids zu schließen.

Vorteilhafte Ausgestaltungen der Strömungsmessvorrichtung gemäß der Erfindung ergeben sich aus den von Anspruch 1 abhängigen Ansprüchen.

So ist es günstig, wenn der mindestens eine Lichtwellenleiter zumindest ein Faser-Bragg-Gitter umfasst und die mindestens eine in den mindestens einen Lichtwellenleiter einkoppelbare elektromagnetische Welle entsprechend der Temperatur des mindestens einen Lichtwellenleiters am Ort des mindestens einen Faser-Bragg-Gitters beeinflussbar ist. Ein solcher Sensortyp zeichnet sich durch seine besondere Multiplexfähigkeit aus, so dass auf einfache Weise ein Sensornetzwerk realisiert werden kann. Ein weiterer Vorteil der Faser-Bragg-Gitter-Technologie ist die Möglichkeit einer praktisch punktförmigen, also einer lokal sehr eng begrenzten Messung. Damit ist es möglich, bei Notwendigkeit einer höheren, insbesondere ortsaufgelösten Messgenauigkeit entlang des Messelements mehrere Faser-Bragg-Gitter nahe beieinander im Lichtwellenleiter nacheinander anzuordnen.

Zur besseren Unterscheidbarkeit haben die im Lichtwellenleiter angeordneten Faser-Bragg-Gitter vorzugsweise jeweils eine voneinander verschiedene Schwerpunktwellenlänge. In jedem Faser-Bragg-Gitter wird von der mindestens einen eingespeisten elektromagnetischen Welle ein durch die jeweilige Schwerpunktswellenlänge bestimmter Anteil zurückreflektiert. Die Schwerpunktswellenlänge ändert sich mit der am Messort herrschenden Einflussgröße, hier insbesondere der Temperatur des Lichtwellenleiters. Diese Veränderung im Wellenlängengehalt (oder Wellenlängenspektrum) des jeweiligen zurückreflektierten Teils der eingespeisten mindestens einen elektromagnetischen Welle wird als Maß für die zu erfassende Einflussgröße verwendet werden. Es ist prinzipiell aber auch möglich, den transmittierten Teil der eingespeisten mindestens einen elektromagnetischen Welle auf die Veränderung im Wellenlängenspektrum zu untersuchen. Zur Abfrage des mindestens einen Faser-Bragg-Gitters mittels der mindestens einen elektromagnetischen Welle kann insbesondere eine breitbandige Lichtquelle, wie beispielsweise eine LED (Leuchtdiode, engl.: Light Emitting Diode) mit einer Bandbreite von etwa 45 nm, eine SLD (Superlumineszenzdiode, engl.: Super Luminescence Diode) mit einer Bandbreite von etwa 20 nm oder ein durchstimmbarer Laser mit einer Bandbreite von etwa 100 nm, zum Einsatz kommen.

Es wird vorgeschlagen, dass das Messelement stabförmig ausgebildet ist. Vorteilhaft ist das Messelement einfach zu montieren und kann beispielsweise durch eine Öffnung in den Strömungskanal eingeführt werden. Ferner kann erreicht werden, dass mit geringem Montageaufwand eine Wartung des Messelements ermöglicht wird. Dazu werden die entsprechenden Befestigungen gelöst und das Messelement durch die Öffnung herausgezogen. Daneben kann das Messelement natürlich jede beliebige andere Form aufweisen. Beispielsweise kann das Messelement kreisförmig oder auch als archimedische Spirale ausgebildet sein

In einer weiteren Ausgestaltung wird vorgeschlagen, dass das Messelement elastisch ist. So kann vorteilhaft das Messelement je nach Einsatz kurzfristig vorgeformt werden, wodurch die Anzahl der verschiedenen Messelementformen reduziert werden kann. Kosten für Lagerhaltung können eingespart werden.

Es ist günstig, wenn die Heizelemente aus Metall gebildet sind. Somit ist eine gleichmäßige Erwärmung längs der Heizelemente gewährleistet.

Weiterhin wird vorgeschlagen, dass die Heizelemente durch voneinander elektrisch isolierte, elektrisch leitfähige Beschichtungen des mindestens einen Lichtwellenleiters gebildet sind. So kann die Bauform des Messelements weiter vereinfacht werden. Die Heizelemente können so auf einfache Weise jeweils einstückig mit dem Leiter verbunden sein, so dass neben einer kostengünstigen Herstellung auch eine Schutzfunktion des Leiters durch die Heizelemente erreicht werden kann. Die leitfähigen Beschichtungen können beispielsweise aus einem Metall wie Wolfram oder auch aus einer Legierung wie beispielsweise Stahl oder dergleichen gebildet sein.

Es wird ferner vorgeschlagen, dass die Heizelemente jeweils einen konstanten spezifischen elektrischen Widerstand aufweisen. So kann vorteilhaft erreicht werden, dass das Messelement über seine Längserstreckung gleichmäßig mit Wärme beaufschlagt wird. Unter spezifischem elektrischem Widerstand ist im Rahmen dieser Anmeldung der elektrische Widerstand pro Längeneinheit zu verstehen.

Darüber hinaus wird vorgeschlagen, dass der jeweilige spezifische Widerstand im Betriebstemperaturbereich weitgehend temperaturunabhängig ist. So kann erreicht werden, dass die jeweilige den einzelnen Heizelementen zugeordnete Wärmezufuhr entlang der Längserstreckung des Messelements im Wesentlichen unabhängig von der aktuellen lokalen Temperatur ist. Die Messgenauigkeit sowie auch die Zuverlässigkeit der Messung kann erhöht werden. Dazu können die Heizelemente beispielsweise aus einem Werkstoff wie Konstantan oder dergleichen gebildet sein.

In einer vorteilhaften Weiterbildung wird vorgeschlagen, dass das Messelement eine Ummantelung aufweist. Das Messelement kann so beispielsweise gegen eine chemische Beanspruchung geschützt werden. Darüber hinaus ermöglicht die Ummantelung einen mechanischen Schutz, beispielsweise während der Montage.

Es wird ferner vorgeschlagen, dass die Ummantelung aus einem keramischen Werkstoff besteht. Mit der keramischen Ummantelung kann vorteilhaft ein Messelement für eine hohe Temperaturbeanspruchung gebildet werden.

Daneben wird vorgeschlagen, dass die Ummantelung zumindest anteilig durch eine Metallhülse gebildet ist. So kann vorteilhaft das Messelement beispielsweise gegen eine elektrostatische Aufladung geschützt werden, indem die Metallhülse mit einem Erdpotential verbindbar ist.

Darüber hinaus wird vorgeschlagen, dass die Ummantelung zugleich die Heizelemente aufweist, wobei die Heizelemente voneinander elektrisch isoliert sind. Bauteile und Kosten können weiter reduziert werden.

Zur weiteren Lösung der Aufgabe wird ein Verfahren entsprechend den Merkmalen des unabhängigen Anspruchs 13 angegeben.

Bei dem erfindungsgemäßen Verfahren handelt es sich um ein Verfahren zum Bestimmen einer Strömungsrichtung eines Fluids mit einer Strömungsmessvorrichtung, wobei
- mindestens eine elektromagnetische Welle in mindestens einen Lichtwellenleiter eines vom Fluid umströmten Messelements eingekoppelt wird,
- zumindest zwei Heizelementen des Messelements derart nacheinander elektrischen Leistung zugeführt wird, dass
   - der mindestens eine Lichtwellenleiter wechselweise von den Heizelementen mit Wärme beaufschlagt und
   - die mindestens eine elektromagnetische Welle in Abhängigkeit von der unterschiedlichen, wechselnden lokalen Temperatur im Lichtwellenleiter zeitlich nacheinander unterschiedlich stark beeinflusst wird,
- die unterschiedlichen, wechselnden Beeinflussungen der mindestens einen elektromagnetischen Welle ermittelt und daraus die Strömungsrichtung des Fluids senkrecht zur Längserstreckung des Messelements bestimmt wird.

Bei dem erfindungsgemäßen Verfahren ergeben sich die vorstehend für die erfindungsgemäße Strömungsmessvorrichtung erläuterten Vorteile.

So ist es auch günstig, wenn der mindestens eine Lichtwellenleiter mindestens ein Faser-Bragg-Gitter umfasst und die mindestens eine elektromagnetische Welle in Abhängigkeit von der unterschiedlichen, wechselnden lokalen Temperatur am Ort des mindestens einen Faser-Bragg-Gitters beeinflusst wird.

Darüber hinaus wird vorgeschlagen, dass die mindestens eine elektromagnetische Welle durch mindestens einen elektromagnetischen Impuls gebildet ist. Vorteilhaft kann Energie eingespart sowie die Messgenauigkeit erhöht werden. Der elektromagnetische Impuls kann beispielsweise durch einen gepulsten Laser erzeugt werden, der über geeignete bekannte Kopplungsmittel in den Lichtwellenleiter für die elektromagnetische Welle eingekoppelt wird.

Ferner wird vorgeschlagen, dass das Messelement in seiner Längserstreckung durch die Heizelemente wechselweise erwärmt wird. Aus einer Temperaturvariation längs des Messelementes aufgrund der Fluidströmung kann vorteilhaft auch die Strömungsgeschwindigkeit entlang des Messelementes ermittelt werden.

Vorteilhaft ist, dass die Heizelemente wechselweise jeweils mit einer konstanten elektrischen Leistung beaufschlagt werden. Insbesondere bei einem über die Längserstreckung des Messelements konstanten Widerstandsverlauf kann somit gemäß dem ohmschen Gesetz jeweils eine konstante Wärmebeaufschlagung erreicht werden. Dies kann mittels Gleichstrom oder auch Wechselstrom erfolgen. Insbesondere kann durch Variation der Wechselstromfrequenz die Heizwirkung der jeweiligen Heizelemente beeinflusst werden, wenn sich die Frequenz in einen Bereich bewegt, in dem Stromverdrängungseffekte wirksam werden.

In einer vorteilhaften Weiterbildung des erfindungsgemäßen Verfahrens wird vorgeschlagen, dass mehrere Messungen mit unterschiedlicher Leistungsbeaufschlagung durchgeführt werden. So kann die Messgenauigkeit weiter erhöht werden.

Weiterhin wird vorgeschlagen, dass als Fluid ein Gas, insbesondere Luft, oder eine Flüssigkeit, insbesondere Wasser oder flüssiger Stickstoff, zur Kühlung einer elektrischen Maschine, insbesondere eines Generators oder eines Motors, verwendet wird. Das Messelement gemäß der erfindungsgemäßen Strömungsmessvorrichtung kann dabei kostengünstig an die physikalischen und/oder chemischen Anforderungen im Strömungskanal einer Kühleinrichtung des Generators bzw. des Motors angepasst werden. Eine genaue Messung einer Strömungsverteilung im Querschnitt eines Strömungskanals kann zudem ebenfalls erreicht werden.

Ferner wird zur weiteren Lösung der Aufgabe mit der Erfindung eine elektrische Maschine mit
- einem drehbar gelagerten Läufer,
- einem zugeordneten, ortsfesten Stator in einem Maschinengehäuse,
- einer Einrichtung zur Kühlung von Teilen mittels eines Fluids innerhalb des Maschinengehäuses, wobei die Kühleinrichtung ein Leitungssystem enthält,
   und
- einer erfindungsgemäßen Strömungsmessvorrichtung vorgeschlagen.

Dabei ist ein in einem Strömungskanal des Leitungssystems angeordnetes Messelement der Strömungsmessvorrichtung zur Messung der Strömungsrichtung des Fluids im Strömungskanal vorgesehen.

Bei der erfindungsgemäßen elektrischen Maschine ergeben sich die vorstehend für die erfindungsgemäße Strömungsmessvorrichtung erläuterten Vorteile.

Mit der erfindungsgemäßen Strömungsmessvorrichtung kann eine effiziente Kühlung der Maschine erreicht werden, indem in den Strömungskanälen der Kühleinrichtung die Strömungsrichtung des Kühlfluids, wie beispielsweise Luft, überwacht wird. Ein auftretender Strömungsstillstand durch ungünstig überlagerte Strömungen kann dabei früh genug erkannt werden, so dass geeignete Maßnahmen eingeleitet werden können, um eine örtlichen Überhitzung und Beschädigung der Maschine zu vermeiden. So kann die Zuverlässigkeit eines Betriebs der Strömungsmaschine erhöht werden.

Es wird vorgeschlagen, dass das Messelement radial zum Querschnitt des Strömungskanals angeordnet ist. Vorteilhaft kann dabei mit mehreren nacheinander angeordneten Faser-Bragg-Gittern die Strömungsrichtung in Abhängigkeit des Radius des Strömungskanalquerschnitts ermittelt werden. Selbstverständlich können im Strömungskanal auch mehrere Messelemente vorgesehen sein, um die Strömungsrichtung an unterschiedlichen Umfangspositionen des Strömungskanals ermitteln zu können.

Es wird ferner vorgeschlagen, dass im Strömungskanal axial beabstandet mehrere Messelemente angeordnet sind. So können vorteilhaft axiale Änderungen der Strömungsrichtung erfasst und ausgewertet werden. Es können auch mehrere unterschiedlich geformte Messelemente verwendet werden, um die gewünschten Informationen über den Strömungsverlauf zu erhalten. So können beispielsweise radiale, stabförmige Messelemente mit entlang einer Kreislinie im Strömungskanal angeordneten Messelementen kombiniert werden. Insbesondere wird vorgeschlagen, dass die Messelemente gemäß dem erfindungsgemäßen Verfahren betrieben werden.

Bevorzugte, jedoch keinesfalls einschränkende Ausführungsbeispiele der Erfindung werden nunmehr anhand der Zeichnung näher erläutert. Zur Verdeutlichung ist die Zeichnung nicht maßstäblich ausgeführt, und gewisse Aspekte sind schematisiert dargestellt. Im Einzelnen zeigen die
- Figur 1: eine Seitenansicht eines Messelements der erfin- dungsgemäßen Strömungsmessvorrichtung in stabförmi- ger Ausführung mit einem Anschlussstecker an einem Ende,
- Figur 2: einen Schnitt durch eine Ausgestaltung eines Mess- elements mit einem Lichtwellenleiter sowie zwei pa- rallel dazu angeordneten Heizleitern,
- Figur 3: einen Schnitt durch eine Ausgestaltung eines Mess- elements mit einem Lichtwellenleiter sowie vier pa- rallel dazu angeordneten Heizleitern,
- Figur 4: einen Schnitt durch eine weitere Ausgestaltung eines Messelements mit zwei den Lichtwellenleiter umgebenden Heizelementen,
- Figur 5: einen Schnitt durch eine weitere Ausgestaltung ei- nes Messelements mit zwei direkt auf einer Oberflä- che des Lichtwellenleiters aufgebrachten Heizele- menten,
- Figur 6: eine Prinzipschaltbild einer Ausführungsform der erfindungsgemäßen Strömungsmessvorrichtung mit dem Messelement gemäß Figur 2,
- Figur 7: eine Prinzipschaltbild einer Ausführungsform der erfindungsgemäßen Strömungsmessvorrichtung mit dem Messelement gemäß Figur 3
- Figur 8: eine Prinzipschaltbild einer Ausführungsform der erfindungsgemäßen Strömungsmessvorrichtung mit dem Messelement gemäß Figur 4 oder 5
- Figur 9: Querschnitt eines Strömungskanals einer Kühlein- richtung mit einem Messelement der erfindungsgemä- ßen Strömungsmessvorrichtung,
- Figur 10: einen Schnitt durch einen Generator mit mehreren Messelementen der erfindungsgemäßen Strömungsmess- vorrichtung.

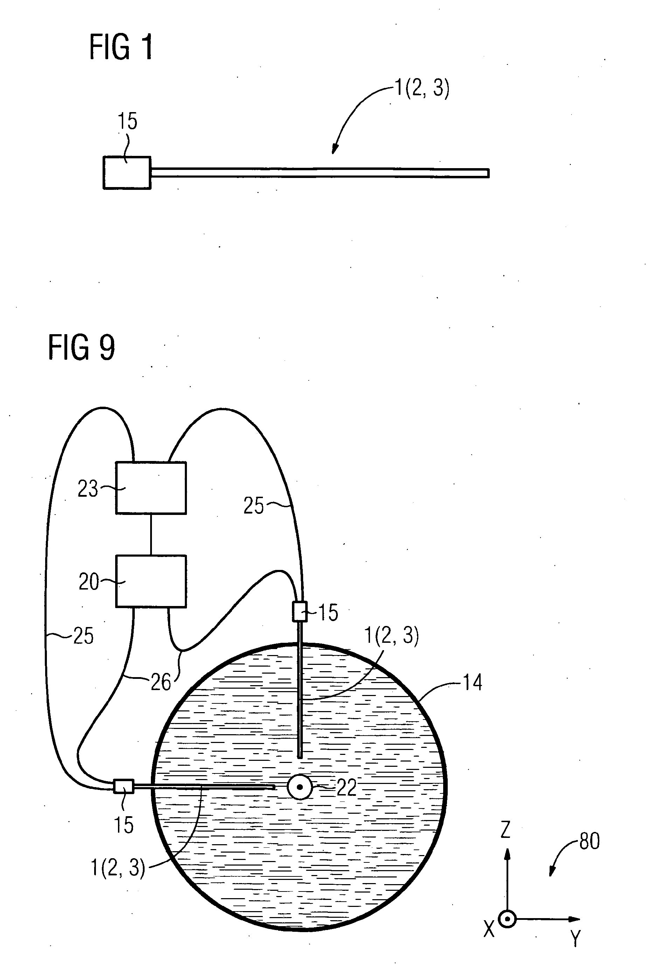

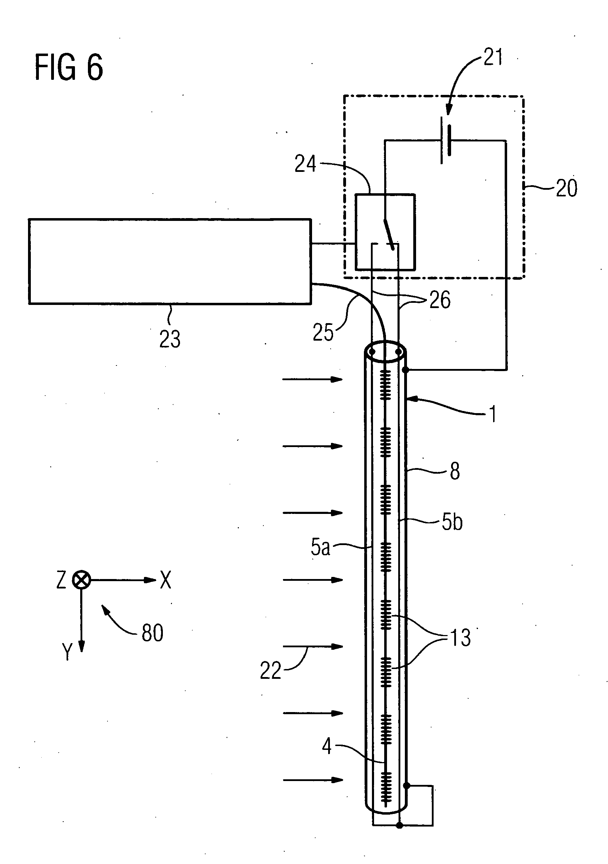

Figur 1 zeigt eine Seitenansicht eines Messelements 1, 2 oder 3 der erfindungsgemäßen Strömungsmessvorrichtung mit einer an einem Ende des Messelements 1, 2 oder 3 angebrachten Steckverbindung 15 zum Anschluss des Messelements 1, 2 oder 3 an eine Steuerungseinheit 20 und eine Auswerteeinheit 23 (siehe Figuren 6 bis 8 und Figur 10). Das Messelement 1, 2 oder 3 ist stabförmig ausgebildet. Zudem kann das Messelement 1, 2 oder 3 elastisch ausgeführt sein, so dass die geometrische Form den vorgegebenen Anforderungen angepasst werden kann.

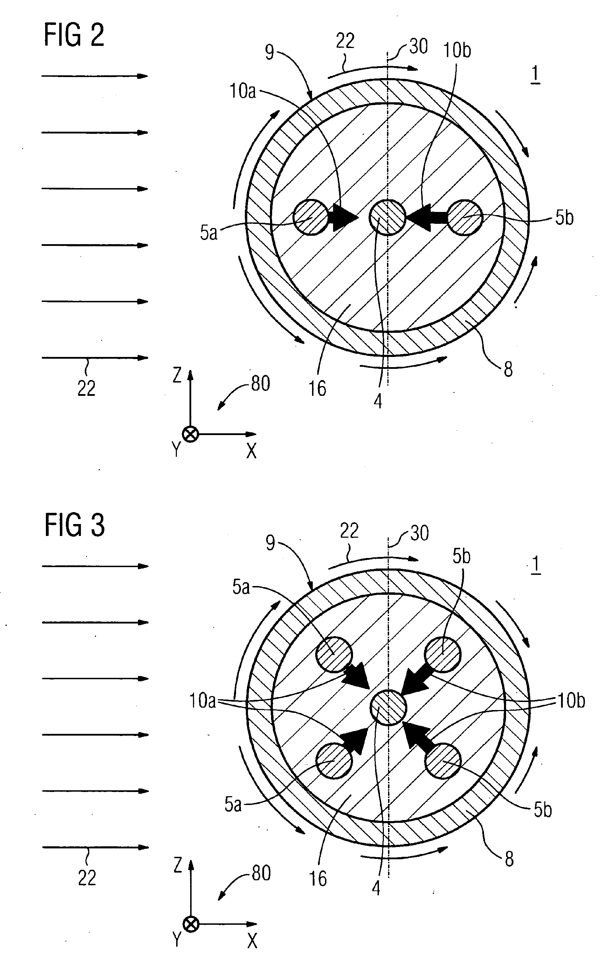

In den Figuren 2 bis 9 ist jeweils ein Koordinatensystem 80 mit einer x-, y- und z-Achse zur besseren Übersicht zugeordnet. Der Einfachheit halber und nicht einschränkend wird angenommen, dass das zu untersuchende Fluid 22 in x-Richtung strömt. Das in x-Richtung strömende Fluid 22 ist dabei durch in x-Richtung weisende Pfeile angedeutet. Das Fluid 22; welches in x-Richtung strömt und auf das sich in y-Richtung erstreckende Messelement 1, 2 oder 3 trifft, umströmt dieses. Bei der Fluidströmung handelt es sich insbesondere um eine turbulente Strömung. Es stellen sich unterschiedliche Strömungsgeschwindigkeiten auf der Oberfläche 9 des Messelementes 1, 2 oder 3 ein. Die Länge der Pfeile gibt dabei den Betrag der Fluidgeschwindigkeit am gezeichneten Ort wieder. Während die Geschwindigkeiten an demjenigen Teil der Messelementoberfläche 9, der im Wesentlichen entgegen der Strömungsrichtung gerichtet ist, am höchsten ist, ist sie an demjenigen Teil der Messelementoberfläche 9, der im Wesentlichen in Strömungsrichtung weist, am geringsten. Der Wärmetransport durch die Messelementoberfläche 9 erfolgt dabei abhängig von der lokalen Strömungsgeschwindigkeit inhomogen. So ist der Wärmetransport an demjenigen Teil der Messelementoberfläche 9, der im Wesentlichen entgegen der Strömungsrichtung gerichtet ist, größer als an demjenigen Teil der Messelementoberfläche 9, der im Wesentlichen in Strömungsrichtung weist. Ein an oder näher an demjenigen Teil der Messelementoberfläche 9, der im Wesentlichen entgegen der Strömungsrichtung gerichtet ist, angeordnetes Heizelement 5a, 6a oder 7a erzeugt dadurch einen geringeren Wärmestrom 10a in Richtung eines insbesondere mittig angeordneten Lichtwellenleiters 4 als ein an oder näher an demjenigen Teil der Messelementoberfläche 9, der im Wesentlichen in Strömungsrichtung weist, angeordnetes Heizelement 5b, 6b oder 7b, dessen Wärmestrom mit 10b gekennzeichnet ist. Die ausgehend von den Heizelementen 5a, 5b oder 6a, 6b oder 7a, 7b in Richtung des jeweiligen Lichtwellenleiters 4 weisenden Pfeile deuten dabei den entsprechenden Wärmestrom 10a, 10b an, dessen Betrag sich in der jeweiligen Pfeillänge widerspiegelt.

Figur 2 und Figur 3 zeigen zwei Ausgestaltungen eines Messelements 1 der erfindungsgemäßen Strömungsmessvorrichtung.

Gemäß dem Ausführungsbeispiel in Figur 2 sind zwei Heizelementen 5a, 5b und ein dazwischen angeordneter Lichtwellenleiter 4 in einem keramischen Werkstoff eingebettet im Messelement 1 enthalten. Ein Heizelement 5a ist nahe demjenigen Teil der Messelementoberfläche 9, der im Wesentlichen entgegen der Strömungsrichtung gerichtet ist, angeordnet, während das andere Heizelement 5a nahe demjenigen Teil der Messelementoberfläche 9, der im Wesentlichen in Strömungsrichtung gerichtet ist, positioniert ist. Der eine Lichtwellenleiter 4 ist auf einer Symmetrieachse 30 des Messelements 1, welche gleichzeitig die Spiegelachse bezüglich beider Heizelemente 5a, 5b darstellt, derart angeordnet, dass dessen jeweilige Abstände zu den beiden Heizelementen 5a, 5b einander entsprechen. Gemäß dem Ausführungsbeispiel in Figur 3 sind es vier paarweise nahe demjenigen Teil der Messelementoberfläche 9, der im Wesentlichen entgegen der Strömungsrichtung gerichtet ist, bzw. nahe demjenigen Teil der Messelementoberfläche 9, der im Wesentlichen in Strömungsrichtung gerichtet ist, liegende Heizelemente 5a, 5b. Der Lichtwellenleiter 4 ist auf einer Symmetrieachse 30 des Messelements 1, welche gleichzeitig die Spiegelachse bezüglich der Heizelementpaare 5a, 5b darstellt, derart angeordnet, dass dessen Abstände zu den jeweiligen Heizelementen 5a, 5b einander entsprechen. Der Lichtwellenleiter 4 ist beispielsweise eine Glas- oder eine Kunststofffaser. Die Heizelemente 5a, 5b und der Lichtwellenleiter 4 sind in einem aus keramischem Werkstoff bestehenden insbesondere zylindrischen Körper 16 eingebettet, der seinerseits von einer passivierenden Ummantelung 8 umgeben ist. Die Heizelemente 5a, 5b sind beispielsweise als Heizdrähte ausgebildet. Die Ummantelung 8 kann in einer Ausführungsform zudem elektrisch leitend aus einem Metall ausgebildet sein (siehe Figur 6).

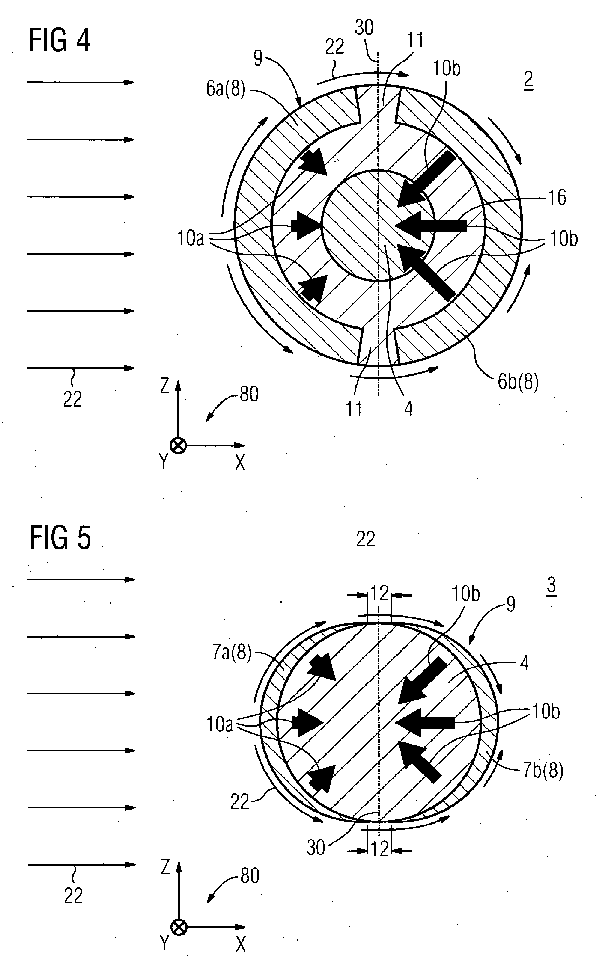

Figur 4 zeigt eine weitere Ausgestaltung eines Messelements 2 der erfindungsgemäßen Strömungsmessvorrichtung mit einem Lichtwellenleiter 4, der von einem aus keramischem Werkstoff bestehenden insbesondere zylindrischen Körper 16 umgeben ist. Um den keramischen Körper 16 sind zwei Heizelemente 6a, 6b derart angeordnet, dass sie gemeinsam zumindest teilweise das Messelement 2 umgeben. Insbesondere bilden die beiden Heizelemente 6a, 6b zugleich zumindest teilweise eine hülsenförmige Ummantelung 8 des Messelements 2 aus. Die erforderliche elektrische Isolierung beider Heizelemente 6a, 6b kann beispielsweise über jeweils einen Steg 11 aus dem keramischen Körper 16 erfolgen.

In Figur 5 ist ein Schnitt durch ein Messelement 3 der erfindungsgemäßen Strömungsmessvorrichtung dargestellt, wobei der Lichtwellenleiter 4 mit zwei voneinander elektrisch isolierten Metallschichten 7a, 7b bedampft ist, welche zugleich zwei Heizelemente 7a, 7b des Messelements 3 darstellen. Zusammen bilden beide Metallschichten 7a, 7b zumindest teilweise eine Ummantelung 8 des Lichtwellenleiters 4 aus. Die Isolierungen zwischen beiden Metallschichten 7a, 7b kann dabei beispielsweise durch einen Luftspalt 12 realisiert werden. Diese Ausgestaltung zeichnet sich durch eine Elastizität aus, so dass das Messelement 3 in seiner räumlichen Ausdehnung bedarfsgerecht angepasst werden kann. Zudem zeichnet sich das Messelement 3 durch ein besonders einfaches Herstellverfahren aus, in dem der Lichtwellenleiter 4 in einem Beschichtungsprozess konventioneller, bekannter Art mit einem geeigneten elektrisch leitfähigen Material beschichtet wird. Die Ausgestaltung zeichnet sich weiter dadurch aus, dass sie eine besonders geringe Wärmekapazität gegenüber den Ausführungsbeispielen des Messelements 1 oder 2 gemäß der Figuren 1 bis 4 aufweist und somit schneller auf sich ändernde Strömungsverhältnisse reagiert.

Die in den vorgenannten Ausgestaltungen verwendeten Heizelemente 5a, 5b, 6a, 6b, 7a und 7b sind vorzugsweise aus einem, Metall gebildet oder aus einer Metalllegierung. In Abhängigkeit von der physikalischen und/oder chemischen Beanspruchung können beispielsweise Stahl, Kupfer, Aluminium, Bronze, Konstantan oder dergleichen verwendet werden. Für Hochtemperaturanwendungen beispielsweise im Strömungskanal einer Gasturbine ist eine Beschichtung mit einem Metall wie Wolfram oder dergleichen vorzuziehen. Für Anwendungen bei niedrigen Temperaturen in einer chemisch aggressiven Umgebung können beispielsweise auch leitfähige Polymere eingesetzt werden. In den hier dargestellten Ausführungsbeispielen weist das Material der Heizelemente 5a, 5b, 6a, 6b, 7a und 7b jeweils einen konstanten elektrischen Widerstand auf. Insbesondere ist der Widerstand im Betriebstemperaturbereich weitgehend unabhängig von der Temperatur. Eine Beaufschlagung der Heizelemente 5a, 5b, 6a, 6b, 7a und 7b mit einem konstanten Strom bzw. mit einem Wechselstrom mit konstantem Effektivwert führt somit zu einer über die Länge der Heizelemente 5a, 5b, 6a, 6b, 7a und 7b gleichmäßigen Leistungszuführung, so dass die entsprechenden Heizelemente 5a, 5b oder 6a, 6b oder 7a, 7b über die Längserstreckung des jeweiligen Messelements 1, 2 oder 3 gleichmäßig mit Wärme beaufschlagt werden.

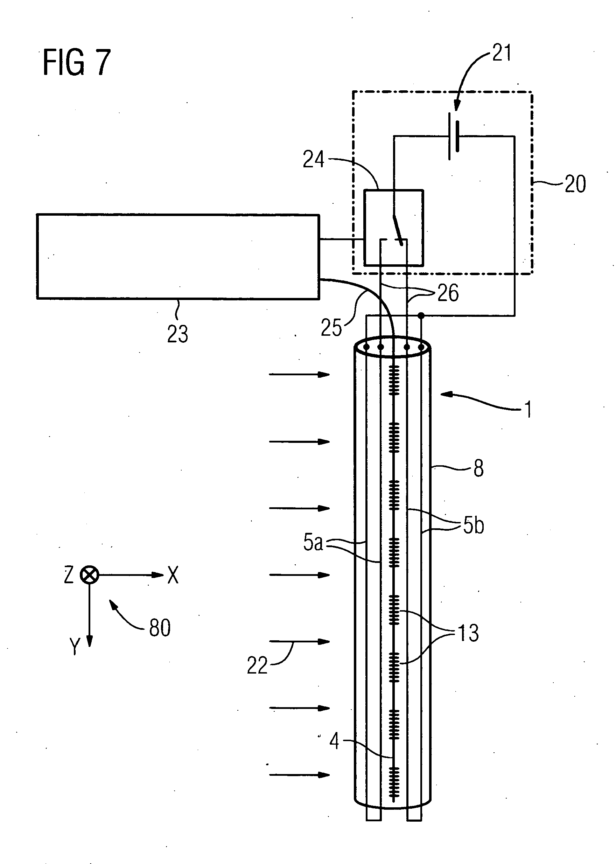

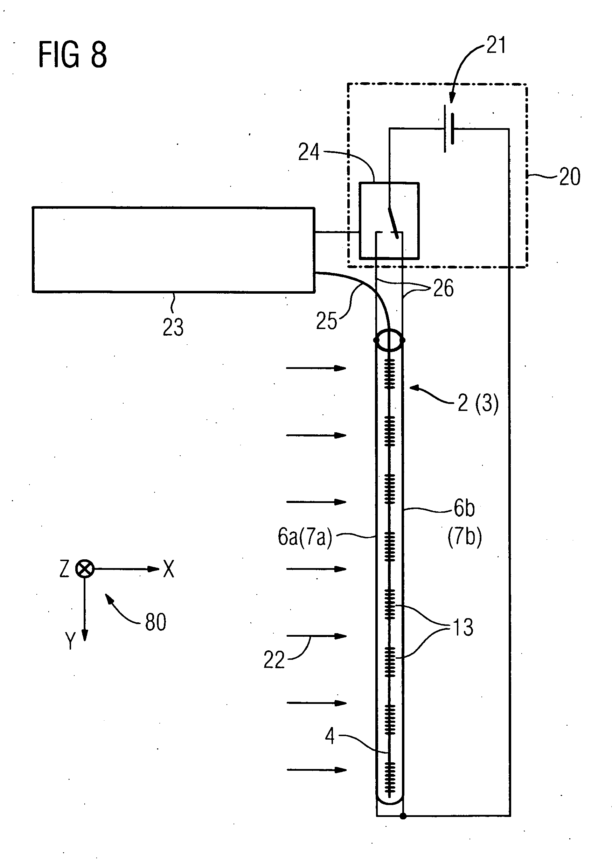

Die Figuren 6 bis 8 zeigen Ausführungsbeispiele der erfindungsgemäße Strömungsmessvorrichtung in Prinzipschaltbildern. Die Strömungsmessvorrichtung in Figur 6 umfasst dabei das Messelement 1 gemäß Figur 2, die Strömungsmessvorrichtung in Figur 7 umfasst das Messelement 1 gemäß Figur 3 und die Strömungsmessvorrichtung in Figur 8 umfasst das Messelement 2 oder 3 gemäß Figur 3 bzw. Figur 4. Alle genannten Ausführungsbeispiele der erfindungsgemäße Strömungsmessvorrichtung weisen weiter eine Steuerungseinheit 20 und eine Auswerteeinheit 23 auf. Das jeweilige Messelement 1, 2 oder 3 erstreckt sich in seiner Längsachse in y-Richtung. Das Messelement 2 oder 3 der Strömungsmessvorrichtung gemäß der Figur 8 ist an seinen jeweiligen Enden mit seinen Heizelementen 6a, 6b oder 7a, 7b elektrisch mit der Steuerungseinheit 20 und an einem der beiden Enden optisch mit der Auswerteeinheit 23 verbunden. Das Messelement 1 der Strömungsmessvorrichtung gemäß der Figuren 6 und 7 ist an einem Ende elektrisch mit der Steuerungseinheit 20 und optisch mit der Auswerteeinheit 23 verbunden, während das andere Ende des Messelements 1 frei verfügbar ist. Hiermit kann eine besonders einfache Montage und/oder Handhabung des Messelements 1 erreicht werden.

Die Steuerungseinheit 20 weist eine elektrische Energiequelle 21 und ein Schaltelement 24 auf. Die Energiequelle 21, welche zwei Anschlüsse aufweist, ist gemäß der Ausführungsbeispiele über das Schaltelement 24 entsprechend dessen Schalterstellung derart mit den Heizelementen 5a, 5b oder 6a, 6b oder 7a, 7b verbunden, dass zumindest eines der Heizelemente 5a, 5b oder 6a, 6b oder 7a, 7b mit elektrischer Leistung beaufschlagt wird und Wärme erzeugt. Die elektrische Energiequelle 21 ist insbesondere eine Stromquelle, über die ein konstanter Gleichstrom vorgebbar ist. Das Schaltelement 24 kann sowohl ein mechanischer Schalter als auch ein elektronischer Schalter sein, wie sie im Stand der Technik in einer Vielzahl von Bauarten und -formen bekannt sind. Das Schaltelement 24 kann jedoch auch einstückig mit der Energiequelle 21 ausgebildet sein, wobei nicht nur eine Schaltfunktion sondern auch eine Steuerfunktion für den Strom vorgesehen sein kann. Des Weiteren ist der Lichtwellenleiter 4 des Messelements 1, 2 oder 3 der erfindungsgemäße Strömungsmessvorrichtung gemäß den Figuren 6 bis 8 über eine optische Verbindungsfaser 25 mit der Auswerteeinheit 23 verbunden. Die Auswerteeinheit 23 wiederum ist über eine Verbindungsleitung zur Übermittlung von Schaltinformationen des Schaltelements 24 mit diesem verbunden.

Das Messelement 1, 2 oder 3 wird von dem Fluid 22 umströmt, wobei die Fluidströmung entlang der Längserstreckung des Messelements 1, 2 oder 3 eine unterschiedliche Strömungsgeschwindigkeit aufweisen kann, angedeutet durch die unterschiedlich langen Pfeile. Die Strömungsrichtung des Fluids 22 weist der Einfachheit halber, wie bereits zuvor angegeben, in x-Richtung. Für eine Messung der Strömungsrichtung des Fluids 22 werden über das Schaltelement 24 gesteuert abwechselnd die Heizelemente 5a, 5b oder 6a, 6b oder 7a, 7b des Messelements 1, 2 bzw. 3 mit elektrischer Leistung beaufschlagt, so dass sich diese abwechselnd erwärmen. Jeder einzelne Heizvorgang kann dabei solange dauern, bis sich ein thermisches Gleichgewicht im Messelement 1, 2 oder 3 eingestellt hat. Er kann aber auch kürzer gewählt werden.

Mittels der Auswerteeinheit 23, welche eine Lichtquelle, einen Detektor und ein Analysemittel aufweist, wird Licht, in Form eines kontinuierlichen Laserstrahls oder in Form von Laserimpulsen, über die optische Verbindungsfaser 25 in den Lichtwellenleiter 4 des Messelements 1, 2 oder 3 eingekoppelt und rückgestreutes Licht mit dem Analysemittel analysiert. Für die Messung wird der Effekt ausgenutzt, dass eine elektromagnetische Welle, die in einen Lichtwellenleiter 4 eingekoppelt wird, beim Durchlauf durch den Lichtwellenleiter 4 gestreut wird. Ein Teil des gestreuten Lichts wird in die Gegenrichtung gestreut, so dass es am Eingang des Lichtwellenleiters 4 erfasst werden kann. Durch die Temperaturabhängigkeit dieses Streueffekts lässt sich auf die Temperatur des Lichtwellenleiters 4 schließen. Das zurückgestreute Lichtsignal besteht aus unterschiedlichen Komponenten, die hinsichtlich der Messanforderungen unterschiedlich geeignet sind. Beispielsweise enthält das zurückgestreute Signal einen Raman-gestreuten Anteil. Mit der Faser-Bragg-Gitter-Technologie ist im Vergleich zur Raman-Technologie eine höhere Ortsauflösung erreichbar, die insbesondere für den Einsatz der Temperaturmessung in Maschinen vorzuziehen ist.

Das Laserlicht wird auf bekannte Weise mit Geräten des Stands der Technik erzeugt. In Abhängigkeit von der Temperatur wird ein Teil des Laserlichts im Lichtwellenleiter 4 von Faser-Bragg-Gittern 13 zurückgestreut. Dieses zurückgestreute Lichtsignal wird über die optische Verbindungsfaser 25 der Auswerteeinheit 23 zugeführt, die daraus die Temperatur am Ort eines oder mehrerer Faser-Bragg-Gitter 13 im Lichtwellenleiters 4 ermittelt.

Mittels der Auswerteeinheit 23, die mit dem Schaltelement 24 der Steuerungseinheit 20 verbunden ist, wird für jede Schalterstellung abwechselnd die entsprechende Temperatur innerhalb des Messelements 1, 2 oder 3 ermittelt. Gesteuert vom Schaltelement 24 und abhängig von der relativen Lage des jeweiligen heizenden Heizelements 5a, 5b oder 6a, 6b oder 7a, 7b stellen sich in einem strömenden Fluid 22 mit gerichteter Strömung unterschiedliche Temperaturen im Messelement 1, 2 oder 3 ein. Mittels der Auswerteeinheit 23 werden die den verschiedenen Schalterstellungen zugeordneten Temperaturen miteinander verglichen, beispielsweise durch Differenzbildung in einer der Auswerteeinheit 23 zugeordneten Rechnereinheit, und hieraus die die Strömungsrichtung des Fluids 22 ermittelt.

Weist das Messelement 1, 2 oder 3 mehrere Faser-Bragg-Gitter 13 entlang des Lichtwellenleiters 4 auf, wie in den Ausführungsbeispielen in Figur 6 bis Figur 8 angedeutet, kann aus der Temperaturverteilung entlang des Messelements 1, 2 oder 3 die Strömungsgeschwindigkeit mit der Strömungsgeschwindigkeitsverteilung des Fluids 22 bestimmt werden.

Im Ausführungsbeispiel der erfindungsgemäßen Strömungsmessvorrichtung nach Figur 6 weist das Messelement 1 zwei parallele als Heizdrähte ausgebildete Heizelemente 5a, 5b auf. Die Energiequelle 21 ist mit einem Anschluss über das Schaltelement 24 entsprechend dessen Schalterstellung mit einem der als Heizdrähte ausgebildeten Heizelemente 5a, 5b und mit dem anderen Anschluss mit der elektrisch leitfähigen Ummantelung 8 des Messelements 1 verbunden. Die beiden Heizelemente 5a, 5b sind dabei am gegenüberliegenden Ende des Messelements 1 ebenfalls mit der elektrisch leitenden Ummantelung 8 gemeinsam verbunden.

Im Ausführungsbeispiel der erfindungsgemäßen Strömungsmessvorrichtung nach Figur 7 weist das Messelement 1 insgesamt vier parallele als Heizdrähte ausgebildete Heizelemente 5a, 5b auf, wobei jeweils zwei Heizdrähte an einem Ende des Messelements 1 zusammengeschlossen sind. Jeweils ein Heizelement 5a, 5b eines Heizelementpaares 5a, 5b ist dabei am anderen Ende des Messelements 1 über das Schaltelement 24 entsprechend dessen Schalterstellung mit einem Anschluss der Energiequelle 21 verbunden, während die jeweiligen anderen beiden Heizelemente 5a, 5b der beiden Heizelementpaare 5a, 5b miteinander mit dem anderen Anschluss der Energiequelle 21 verbunden sind.

Es ist aber auch denkbar, analog zu Figur 6, alle vier Heizelemente 5a, 5b an einem Ende zusammen mit der Ummantelung 8, die in diesem Fall elektrisch leitend ausgeführt ist, gemeinsam zu verbinden, so dass die Energiequelle 21 am anderen Ende des Messelements 1 ebenfalls an die Ummantelung 8 angeschlossen werden kann. Bei diesem nicht dargestellten Ausgestaltungsbeispiel müssen entweder jeweils zwei Heizelemente 5a, 5b gemeinsam und gleichzeitig über das Schaltelement 24 mit der Energiequelle 21 verbindbar sein oder das Schaltelement 24 muss derart ausgestaltet sein, dass mehr als zwei Heizelemente 5a, 5b nacheinander schaltbar sind. Die Verwendung eines derartigen Schaltelements 24 mit zahlreichen angeschlossenen Heizelementen 5a, 5b, die beispielsweise kreisförmig um den im Querschnittszentrum des Messelements 1 angeordneten Lichtwellenleiter 4 angeordnet sind, ermöglicht eine noch genaueren Bestimmung der Strömungsrichtung des Fluids 22.

Im Ausführungsbeispiel der erfindungsgemäßen Strömungsmessvorrichtung nach Figur 8 ist ein Anschluss der Energiequelle 21 über das Schaltelement 24 entsprechend dessen Schalterstellung mit einem der als hülsenförmige Teilummantelungen 8 (Figur 4) oder als Metallfilme (Figur 5) ausgebildeten Heizelemente 6a, 6b oder 7a, 7b an einem Ende des Messelementes 2 oder 3 verbunden. Der zweite Anschluss der Energiequelle 21 ist am anderen Ende des Messelementes 2 oder 3 mittels einer elektrischen Leitung mit beiden Heizelementen 6a, 6b oder 7a, 7b gemeinsam verbunden.

Figur 9 zeigt einen runden Querschnitt eines Strömungskanals 14, durch welchen ein Fluid 22 in x-Richtung strömt. Der Strömungskanal 14 ist dabei als Beispiel mit zwei bezüglich des Strömungskanalquerschnitts radial angeordneten Messelementen 1, 2 oder 3 versehen. Die beiden Messelemente 1, 2 oder 3 sind über eine elektrische Verbindungsleitung 26 mit der Steuerungseinheit 20 und über eine optische Verbindungsfaser 25 mit der Auswerteeinheit 23 verbunden.

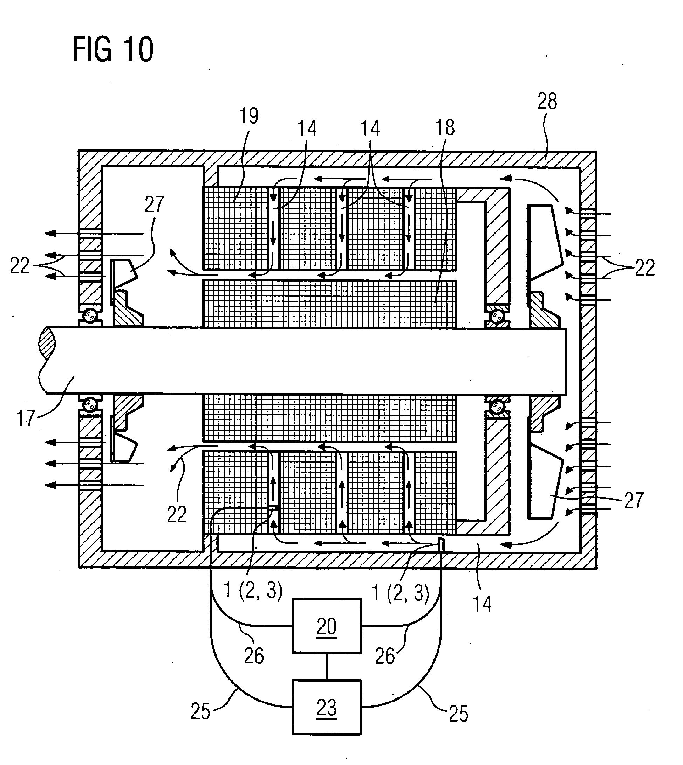

In Figur 10 ist ein Generator als elektrische Maschine schematisch dargestellt. Der Generator weist einen mit einem Gehäuse 28 fest verbundenen feststehenden Stator 19 und einen auf einer Rotorwelle 17 beweglich gelagerten Läufer 18 auf. Der Generator wird mittels einer Kühleinrichtung mit beispielsweise Luft als kühlendes Fluid 22 gekühlt. Die Kühleinrichtung weist hierfür zwei Lüfter 27 auf, die mittels eines Leitungssystems die Kühlluft 22 durch den Generator leiten. Das Leitungssystem weist hierfür zahlreiche Strömungskanäle, insbesondere auch im Stator 19, auf. Die Kühlluft 22 wird im dargestellten Ausführungsbeispiel von außen nach innen in Richtung Läufer 18 durch den Stator 19 geleitet und weiter durch einen zwischen Stator 19 und Läufer 18 angeordneten Spalt nach außen transportiert. Gleichzeitig kann jedoch vom Rotor des Generators Luft 22 angesaugt und von innen nach außen in umgekehrte Richtung durch den Stator 19 gepresst werden. Wenn sich beide Luftströme ungünstig überlagern, kommt es innerhalb des Leitungssystems zum Strömungsstillstand und somit gegebenenfalls zu einer örtlichen Überhitzung und Beschädigung des Generators. Um dies zu vermeiden, wird mittels der erfindungsgemäßen Strömungsmessvorrichtung die Strömungsrichtung in den Strömungskanälen überwacht. In diesem Ausführungsbeispiel sind als Beispiel an zwei Stellen des Generators zwei Strömungskanäle mit jeweils einem Messelement 1, 2 oder 3 der erfindungsgemäßen Strömungsmessvorrichtung versehen. Beide Messelemente 1, 2 oder 3 sind dabei mit der zugehörigen Steuerungseinheit 20 und Auswerteeinheit 23 verbunden. Bei Unregelmäßigkeiten in der Kühlluftströmung ist somit die Möglichkeit gegeben, zeitnah zu reagieren und geeignete Schutzmassnahmen einzuleiten.

Der Einsatz der erfindungsgemäßen Strömungsmessvorrichtung in einem luftgekühlten Generator dient hier nur als Beispiel. Es ist auch möglich die erfindungsgemäßen Strömungsmessvorrichtung in elektrischen Maschinen zu Verwenden, die mit H₂-Gas einem Edelgas oder einem beliebigen anderen Gas als Fluid 22 gekühlt werden. Als kühlendes Fluids 22 kann auch eine Kühlflüssigkeit, wie Wasser oder auch bei kryogener Kühlung ein flüssiges Edelgas oder flüssiger Stickstoff vorgesehen sein.

Die erfindungsgemäße Strömungsmessvorrichtung kann auch in einer Turbinen, wie beispielsweise einer Dampf- oder einer Gasturbinen, eingesetzt werde. So können mittels der erfindungsgemäßen Strömungsmessvorrichtung Strömungsrichtungen insbesondere in turbulenten Strömungsbereichen im zugeordneten Kühlluftsystem, im zugeordneten Kompressor, am zugeordneten Kompressoreinlass und/oder im entsprechenden Abgasstrom gemessen werden.

Die in den Figuren dargestellten Ausführungsbeispiele dienen lediglich der Erläuterung der Erfindung und sind für diese nicht beschränkend. So kann insbesondere die Art des Messelements 1, 2 oder 3 insbesondere seine geometrische Ausformung, variieren, ohne den Schutzbereich der Erfindung zu verlassen. Darüber hinaus können natürlich auch mehrere Elemente zusammengeschaltet werden, um bestimmte Änderungen der Strömungsrichtung genauer untersuchen zu können.

## Patentansprüche

1. Strömungsmessvorrichtung zur Bestimmung einer Strömungsrichtung eines Fluids (22), aufweisend
- ein von dem Fluid (22) umströmbares Messelement (1,' 2, 3) mit mindestens einem Lichtwellenleiter (4) und wenigstens zwei zum mindestens einen Lichtwellenleiter (4) benachbart angeordneten elektrischen Heizelementen (5a, 5b, 6a, 6b, 7a, 7b), wobei
- der mindestens eine Lichtwellenleiter (4) über jeweils einen von dem jeweiligen Heizelement (5a, 5b, 6a, 6b, 7a, 7b) zum mindestens einen Lichtwellenleiter (4) gerichteten Wärmestrom (10a, 10b) mit Wärme beaufschlagbar ist,
- die Richtungen der Wärmeströme (10a, 10b) zumindest anteilig entgegengesetzt sind,
- die einzelnen Wärmeströme (10a, 10b) unterschiedlich stark mit der Strömungsrichtung des Fluids (22) korreliert sind,
und
- mindestens eine in den mindestens einen Lichtwellenleiter (4) einkoppelbare elektromagnetische Welle entsprechend der Temperatur des mindestens einen Lichtwellenleiters (4) beeinflussbar ist,
weiterhin aufweisend eine Auswerteeinheit (23), mit welcher die von den einzelnen Wärmeströmen (10a, 10b) ausgehende Temperaturbeeinflussung der elektromagnetischen Welle auswertbar und die Strömungsrichtung des Fluids (22) bestimmbar ist, **gekennzeichnet durch** eine Steuerungseinheit, mit welcher den zumindest beiden Heizelementen (5a, 5b, 6a, 6b, 7a, 7b) zeitlich nacheinander elektrischen Leistung zuführbar ist.

2. Strömungsmessvorrichtung nach Anspruch 1, **dadurch gekennzeichnet, dass** der mindestens eine Lichtwellenleiter (4) zumindest ein Faser-Bragg-Gitter (13) umfasst und die mindestens eine in den mindestens einen Lichtwellenleiter (4) einkoppelbare elektromagnetische Welle entsprechend der Temperatur des mindestens einen Lichtwellenleiters (4) am Ort des mindestens einen Faser-Bragg-Gitters (13) beeinflussbar ist.

3. Strömungsmessvorrichtung nach Anspruch 1 oder 2, **dadurch gekennzeichnet, dass** das Messelement (1, 2, 3) stabförmig ausgebildet ist.

4. Strömungsmessvorrichtung nach einem der Ansprüche 1 bis 3, **dadurch gekennzeichnet, dass** das Messelement (1, 2, 3) elastisch ist.

5. Strömungsmessvorrichtung nach einem der Ansprüche 1 bis 4, **dadurch gekennzeichnet, dass** die Heizelemente (5a, 5b, 6a, 6b, 7a, 7b) aus Metall gebildet sind.

6. Strömungsmessvorrichtung nach einem der Ansprüche 1 bis 5, **dadurch gekennzeichnet, dass** die Heizelemente (7a, 7b) durch voneinander elektrisch isolierte, elektrisch leitfähige Beschichtungen des mindestens einen Lichtwellenleiters (4) gebildet sind.

7. Strömungsmessvorrichtung nach einem der Ansprüche 1 bis 6, **dadurch gekennzeichnet, dass** die Heizelemente (5a, 5b, 6a, 6b, 7a, 7b) jeweils einen konstanten spezifischen elektrischen Widerstand aufweisen.

8. Strömungsmessvorrichtung nach Anspruch 7, **dadurch gekennzeichnet, dass** der jeweilige spezifische Widerstand im Betriebstemperaturbereich weitgehend temperaturunabhängig ist.

9. Strömungsmessvorrichtung nach einem der Ansprüche 1 bis 6, **gekennzeichnet durch** eine Ummantelung (8) des Messelements (1, 2, 3).

10. Strömungsmessvorrichtung nach Anspruch 9, **dadurch gekennzeichnet, dass** die Ummantelung (8) aus einem keramischen Werkstoff besteht.

11. Strömungsmessvorrichtung nach Anspruch 9 oder 10, **dadurch gekennzeichnet, dass** die Ummantelung (8) zumindest anteilig durch eine Metallhülse gebildet ist.

12. Strömungsmessvorrichtung nach Anspruch 11, **dadurch gekennzeichnet, dass** die Ummantelung (8) zugleich die Heizelemente (6a, 6b, 7a, 7b) aufweist, wobei die Heizelemente (6a, 6b, 7a, 7b) voneinander elektrisch isoliert sind.

13. Verfahren zum Bestimmen einer Strömungsrichtung eines Fluids (22) mit einer Strömungsmessvorrichtung, wobei
- mindestens eine elektromagnetische Welle in mindestens einen Lichtwellenleiter (4) eines vom Fluid (22) umströmten Messelements (1, 2, 3) eingekoppelt wird,
- zumindest zwei Heizelementen (5a, 5b, 6a, 6b, 7a, 7b) des Messelements (1, 2, 3) derart nacheinander elektrischen Leistung zugeführt wird, dass
- der mindestens eine Lichtwellenleiter (4) wechselweise von den Heizelementen (5a, 5b, 6a, 6b, 7a, 7b) mit Wärme beaufschlagt und
- die mindestens eine elektromagnetische Welle in Abhängigkeit von der unterschiedlichen, wechselnden lokalen Temperatur im Lichtwellenleiter (4) zeitlich nacheinander unterschiedlich stark beeinflusst wird,
- die unterschiedlichen, wechselnden Beeinflussungen der mindestens einen elektromagnetischen Welle ermittelt und daraus die Strömungsrichtung des Fluids (22) senkrecht zur Längserstreckung des Messelements (1, 2, 3) bestimmt wird.

14. Verfahren nach Anspruch 13, **dadurch gekennzeichnet, dass** der mindestens eine Lichtwellenleiter (4) mindestens ein Faser-Bragg-Gitter (13) umfasst und die mindestens eine elektromagnetische Welle in Abhängigkeit von der unterschiedlichen, wechselnden lokalen Temperatur am Ort des mindestens einen Faser-Bragg-Gitters (13) beeinflusst wird.

15. Verfahren nach Anspruch 13 oder 14, **dadurch gekennzeichnet, dass** die mindestens eine elektromagnetische Welle durch mindestens einen elektromagnetischen Impuls gebildet ist.

16. Verfahren nach einem der Ansprüche 13 bis 15, **dadurch gekennzeichnet, dass** das Messelement (1, 2, 3) in seiner Längserstreckung durch die Heizelemente (5a, 5b, 6a, 6b, 7a, 7b) wechselweise erwärmt wird.

17. Verfahren nach einem der Ansprüche 13 bis 16, **dadurch gekennzeichnet, dass** die Heizelemente (5a, 5b, 6a, 6b, 7a, 7b) wechselweise jeweils mit einer konstanten elektrischen Leistung beaufschlagt werden.

18. Verfahren nach einem der Ansprüche 13 bis 17, **dadurch gekennzeichnet, dass** mehrere Messungen mit unterschiedlicher Leistungsbeaufschlagung durchgeführt werden.

19. Verfahren nach einem der Ansprüche 13 bis 18, **dadurch gekennzeichnet, dass** als Fluid (22) ein Gas oder eine Flüssigkeit zur Kühlung einer elektrischen Maschine (9), insbesondere eines Generators oder eines Motors, verwendet wird.

20. Elektrische Maschine mit
- einem drehbar gelagerten Läufer (18);
- einem zugeordneten, ortsfesten Stator (19) in einem Maschinengehäuse (28),
- einer Einrichtung zur Kühlung von Teilen mittels eines Fluids (22) innerhalb des Maschinengehäuses (28), wobei die Kühleinrichtung (27, 14) ein Leitungssystem enthält,
und
- einer Strömungsmessvorrichtung nach einem der Ansprüche 1 bis 12,
wobei ein in einem Strömungskanal (14) des Leitungssystems angeordnetes Messelement (1, 2, 3) der Strömungsmessvorrichtung zur Messung der Strömungsrichtung des Fluids (22) im Strömungskanal (14) vorgesehen ist.

21. Elektrische Maschine nach Anspruch 20, **dadurch gekennzeichnet, dass** das Messelement (1, 2, 3) radial zum Querschnitt des Strömungskanals (14) angeordnet ist.

22. Elektrische Maschine nach einem der Ansprüche 20 bis 21, **dadurch gekennzeichnet, dass** im Strömungskanal (14) axial beabstandet mehrere Messelemente (1, 2, 3) angeordnet sind.

23. Verfahren nach einem der Ansprüche 13 bis 19, **dadurch gekennzeichnet, dass** die Strömungsrichtung eines Fluids (22) in einem Kühlleitungssystem einer elektrischen Maschine nach einem der Ansprüche 20 bis 22 bestimmt wird.

## Claims

1. Flowmeter for determination of a flow direction of a fluid (22), having
- a measurement element (1, 2, 3) around which the fluid (22) can flow and having at least one optical waveguide (4) and at least two electrical heating elements (5a, 5b, 6a, 6b, 7a, 7b) which are arranged adjacent to the at least one optical waveguide (4), in which:
- the at least one optical waveguide (4) can have heat applied to it via a respective heat flow (10a, 10b) which is directed from the respective heating element (5a, 5b, 6a, 6b, 7a, 7b) to the at least one optical waveguide (4),
- at least a proportion of the directions of the heat flows (10a, 10b) are opposite,
- the individual heat flows (10a, 10b) are correlated to different extents with the flow direction of the fluid (22),
and
- at least one electromagnetic wave, which can be injected into the at least one optical waveguide (4), can be influenced corresponding to the temperature of the at least one optical waveguide (4),
furthermore having an evaluation unit (23), by means of which the temperature influence originating from the individual heat flows (10a, 10b) on the electromagnetic wave can be evaluated, and the flow direction of the fluid (22) can be determined,
**characterized by** a control unit, by means of which electrical power can be supplied successively in time to the at least two heating elements (5a, 5b, 6a, 6b, 7a, 7b).

2. Flowmeter according to Claim 1, **characterized in that** the at least one optical waveguide (4) comprises at least one fibre Bragg grating (13) and the at least one electromagnetic wave which can be injected into the at least one optical waveguide (4) can be influenced, corresponding to the temperature of the at least one optical waveguide (4) at the location of the at least one fibre Bragg grating (13).

3. Flowmeter according to Claim 1 or 2, **characterized in that** the measurement element (1, 2, 3) is in the form of a rod.

4. Flowmeter according to one of Claims 1 to 3, **characterized in that** the measurement element (1, 2, 3) is elastic.

5. Flowmeter according to one of Claims 1 to 4, **characterized in that** the heating elements (5a, 5b, 6a, 6b, 7a, 7b) are formed from metal.

6. Flowmeter according to one of Claims 1 to 5, **characterized in that** the heating elements (7a, 7b) are formed by electrically conductive coatings, which are electrically isolated from one another, on the at least one optical waveguide (4).

7. Flowmeter according to one of Claims 1 to 6, **characterized in that** the heating elements (5a, 5b, 6a, 6b, 7a, 7b) each have a constant electrical resistivity.

8. Flowmeter according to Claim 7, **characterized in that** the respective resistivity is largely independent of temperature in the operating temperature range.

9. Flowmeter according to one of Claims 1 to 6, **characterized by** a sheath (8) for the measurement element (1, 2, 3).

10. Flowmeter according to Claim 9, **characterized in that** the sheath (8) is composed of a ceramic material.

11. Flowmeter according to Claim 9 or 10, **characterized in that** at least a proportion of the sheath (8) is formed by a metal sleeve.

12. Flowmeter according to Claim 11, **characterized in that** the sheath (8) at the same time has the heating elements (6a, 6b, 7a, 7b), with the heating elements (6a, 6b, 7a, 7b) being electrically isolated from one another.

13. Method for determination of a flow direction of a fluid (22) by means of a flowmeter, in which
- at least one electromagnetic wave is injected into at least one optical waveguide (4) of a measurement element (1, 2, 3) around which the fluid (22) flows,
- at least two heating elements (5a, 5b, 6a, 6b, 7a, 7b) of the measurement element (1, 2, 3) are supplied with electrical power successively, such that
- the at least one optical waveguide (4) has heat applied to it alternately from the heating elements (5a, 5b, 6a, 6b, 7a, 7b), and
- the at least one electromagnetic wave is influenced to different extents successively in time as a function of the different, changing local temperature in the optical waveguide (4),
- the different, alternating influences of the at least one electromagnetic wave are determined, and the flow direction of the fluid (22) at right angles to the longitudinal extent of the measurement element (1, 2, 3) is determined from this.

14. Method according to Claim 13, **characterized in that** the at least one optical waveguide (4) comprises at least one fibre Bragg grating (13) and the at least one electromagnetic wave is influenced as a function of the different, changing local temperature at the location of the at least one fibre Bragg grating (13).

15. Method according to Claim 13 or 14, **characterized in that** the at least one electromagnetic wave is formed by at least one electromagnetic pulse.

16. Method according to one of Claims 13 to 15, **characterized in that** the measurement element (1, 2, 3) is heated alternately in its longitudinal extent by the heating elements (5a, 5b, 6a, 6b, 7a, 7b).

17. Method according to one of Claims 13 to 16, **characterized in that** a constant electrical power is applied alternately to each of the heating elements (5a, 5b, 6a, 6b, 7a, 7b).

18. Method according to one of Claims 13 to 17, **characterized in that** a plurality of measurements are carried out with a different power applied.

19. Method according to one of Claims 13 to 18, **characterized in that** a gas or a liquid for cooling an electrical machine (9), in particular a generator or a motor, is used as the fluid (22).

20. Electrical machine having
- a rotor (18) which is mounted such that it can rotate,
- an associated fixed-position stator (19) in a machine housing (28),
- a device for cooling parts by means of a fluid (22) within the machine housing (28), with the cooling device (27, 14) containing a line system,
and
- a flowmeter according to one of Claims 1 to 12,
with a measurement element (1, 2, 3), which is arranged in a flow channel (14) of the line system, of the flowmeter being provided in order to measure the flow direction of the fluid (22) in the flow channel (14).

21. Electrical machine according to Claim 20, **characterized in that** the measurement element (1, 2, 3) is arranged radially with respect to the cross section of the flow channel (14).

22. Electrical machine according to one of Claims 20 and 21, **characterized in that** a plurality of measurement elements (1, 2, 3) are arranged at a distance from one another axially in the flow channel (14).

23. Method according to one of Claims 13 to 19, **characterized in that** the flow direction of a fluid (22) in a cooling line system of an electrical machine is determined according to one of Claims 20 to 22.

## Revendications

1. Dispositif de mesure d'un courant pour la détermination du sens du courant d'un fluide ( 22 ), comprenant
un élément ( 1, 2, 3 ) de mesure autour duquel peut s'écouler le fluide ( 22 ) et ayant au moins un guide ( 4 ) d'onde lumineuse et au moins deux éléments ( 5a, 5b, 6a, 6b, 7a, 7b ) électriques de chauffage disposés au voisinage du au moins un guide d'onde ( 4 ) d'onde lumineuse, dans lequel
- le moins un guide ( 4 ) d'onde lumineuse peut être alimenté en chaleur par respectivement un flux ( 10a, 10b ) calorifique allant de l'élément ( 5a, 5b, 6a, 6b, 7a, 7b ) respectif de chauffage au au moins un guide ( 4 ) d'onde lumineuse,
- les sens des flux ( 10a, 10b ) calorifiques sont contraires au moins sur certaines parties,
- les flux ( 10a, 10b ) calorifiques individuels sont corrélés d'une manière différemment forte au sens d'écoulement du fluide ( 22 ),
et
- au moins une onde électromagnétique pouvant être injectée dans le guide ( 4 ) d'onde lumineuse peut être influencée en fonction de la température du au moins un guide ( 4 ) d'onde lumineuse,
comportant en outre une unité ( 23 ) d'exploitation par laquelle l'onde électromagnétique provenant des divers flux ( 10a, 10b) calorifiques peut être exploitée et le sens de l'écoulement du fluide ( 22 ) peut être déterminé,
**caractérisé par** une unité de commande par laquelle de la puissance électrique peut être envoyée successivement dans le temps au au moins deux éléments ( 5a, 5b, 6a, 6b, 7a, 7b ) de chauffage.

2. Dispositif de mesure du courant suivant la revendication 1, **caractérisé en ce que** le au moins un guide ( 4 ) d'onde lumineuse comprend au moins un réseau ( 13 ) à fibre de Bragg et la au moins une onde électromagnétique pouvant être injectée dans le au moins un guide ( 4 ) d'onde lumineuse peut être influencée en fonction de la température du au moins un guide ( 4 ) d'onde lumineuse à l'emplacement du au moins un réseau ( 13 ) à fibre de Bragg.

3. Dispositif de mesure du courant suivant la revendication 1 ou 2, **caractérisé en ce que** l'élément ( 1, 2, 3 ) de mesure est en forme de barreau.

4. Dispositif de mesure du courant suivant l'une des revendications 1 à 3, **caractérisé en ce que** l'élément ( 1, 2, 3 ) de mesure est élastique.

5. Dispositif de mesure du courant suivant l'une des revendications 1 à 4, **caractérisé en ce que** les éléments ( 5a, 5b, 6a, 6b, 7a, 7b ) de chauffage sont en métal.

6. Dispositif de mesure du courant suivant l'une des revendications 1 à 5, **caractérisé en ce que** les éléments ( 7a, 7b ) de chauffage sont formés par des couches isolées électriquement l'une de l'autre et conductrice de l'électricité du au moins un guide ( 4 ) d'onde lumineuse.

7. Dispositif de mesure du courant suivant l'une des revendications 1 à 6, **caractérisé en ce que** les éléments ( 5a, 5b, 6a, 6b, 7a, 7b ) de chauffage ont respectivement une résistance électrique spécifique constante.

8. Dispositif de mesure du courant suivant la revendication 7, **caractérisé en ce que** la résistance spécifique respective est dans une grande mesure indépendante de la température dans la plage de température de fonctionnement.

9. Dispositif de mesure du courant suivant l'une des revendications 1 à 6, **caractérisé par** un gainage ( 8 ) de l'élément ( 1, 2, 3 ) de mesure.

10. Dispositif de mesure du courant suivant la revendication 9, **caractérisé en ce que** le gainage ( 8 ) est en un matériau céramique.

11. Dispositif de mesure du courant suivant la revendication 9 ou 10, **caractérisé en ce que** le gainage ( 8 ) est formé au moins par partie d'un manchon métallique.

12. Dispositif de mesure du courant suivant la revendication 11, **caractérisé en ce que** le gainage ( 8 ) a en même temps les éléments ( 6a, 6b, 7a, 7b ) de chauffage, les éléments ( 6a, 6b, 7a, 7b ) de chauffage étant isolés électriquement les uns des autres.

13. Procédé de détermination d'un sens d'écoulement d'un fluide ( 22 ) par un dispositif de mesure du courant, dans lequel
On injecte au moins une onde électromagnétique dans au moins un guide ( 4 ) d'onde lumineuse d'un élément ( 1, 2, 3 ) de mesure autour duquel passe le fluide ( 22 ),
On envoie de la puissance électrique successivement à au moins deux éléments ( 5a, 5b, 6a, 6b, 7a, 7b ) de chauffage de l'élément ( 1, 2, 3 ) de mesure de manière à ce que
- le au moins un guide ( 4 ) d'onde lumineuse soit alimenté en chaleur en alternance par les éléments ( 5a, 5b, 6a, 6b, 7a, 7b ) de chauffage et
- la au moins une onde électromagnétique soit très influencée d'une manière différente successivement dans le temps par les températures locales différentes alternées dans le guide ( 4 ) d'onde lumineuse,
- les flux ( 10a, 10b ) calorifiques individuels sont corrélés d'une manière différemment forte au sens d'écoulement du fluide ( 22 ),
et
- au moins une onde électromagnétique pouvant être injectée dans le guide ( 4 ) d'onde lumineuse peut être influencée en fonction de la température du au moins un guide ( 4 ) d'onde lumineuse,
on détermine les influences différentes alternées de la au moins une onde électromagnétique et on en détermine le sens du courant du fluide ( 22 ) perpendiculairement à l'étendue longitudinale de l'élément ( 1, 2, 3 ) de mesure.

14. Procédé suivant la revendication 13, **caractérisé en ce que** le au moins un guide ( 4 ) d'onde lumineuse comprend au moins un réseau ( 13 ) à fibre de Bragg et la au moins une onde électromagnétique est influencée en fonction de la température locale différente alternée à l'emplacement du au moins un réseau ( 13 ) à fibre de Bragg.

15. Procédé suivant la revendication 13 ou 14, **caractérisé en ce que** la au moins une onde électromagnétique est formée par au moins une impulsion électromagnétique.

16. Procédé suivant l'une des revendications 13 à 15, **caractérisé en ce que** l'élément ( 1, 2, 3 ) de mesure est échauffé de manière alternée dans son étendue longitudinale par les éléments ( 5a, 5b, 6a, 6b, 7a, 7b ) de chauffage.

17. Procédé suivant l'une des revendications 13 à 16, **caractérisé en ce que** les éléments ( 5a, 5b, 6a, 6b, 7a, 7b ) de chauffage sont alimentés en alternance respectivement par une puissance électrique constante.

18. Procédé suivant l'une des revendications 13 à 17, **caractérisé en ce que** l'on effectue plusieurs mesures en ayant une alimentation en puissance différente.

19. Procédé suivant l'une des revendications 13 à 18, **caractérisé en ce que** l'on utilise comme fluide ( 22 ) un gaz ou un liquide de refroidissement d'une machine ( 9 ) électrique notamment d'une génératrice ou d'un moteur.

20. Machine électrique comprenant
- un rotor ( 18 ) monté tournant,
- un stator ( 19 ) associé et fixe dans un carter ( 28 ) de machine,
- un dispositif de refroidissement de parties au moyen d'un fluide ( 22 ) à l'intérieur du carter ( 28 ) de la machine, le dispositif ( 27, 14 ) de refroidissement comportant un système de conduite, et
- un dispositif de mesure du courant suivant l'une des revendications 1 à 12,
dans lequel un élément ( 1, 2, 3 ) de mesure, disposé dans le canal ( 14 ) d'écoulement du système de conduit, du dispositif de mesure du courant est prévu pour la mesure du sens du courant du fluide ( 22 ) dans le canal ( 14 ) d'écoulement.

21. Machine électrique suivant la revendication 20, **caractérisé en ce que** l'élément ( 1, 2, 3 ) de mesure est disposée radialement à la section transversale du canal ( 14 ) d'écoulement.

22. Machine électrique suivant la revendication 20 à 21, **caractérisé en ce que** plusieurs éléments ( 1, 2, 3 ) de mesure sont disposés à distance axialement dans le canal ( 14 ) d'écoulement.

23. Procédé suivant l'une des revendications 13 à 19, dans lequel on détermine le sens d'écoulement d'un fluide ( 22 ) dans un système de conduite de refroidissement d'une machine électrique suivant l'une des revendications 20 à 22.
